(19) Europäisches Patentamt
European Patent Office
Office européen des brevets

(11) Publication number: **0 219 148 B1**

(12) # EUROPEAN PATENT SPECIFICATION

(45) Date of publication of the patent specification: **07.02.90**

(51) Int. Cl.⁴: **A63H 33/10**, F16B 12/40, E04B 1/19

(21) Application number: **86201516.1**

(22) Date of filing: **02.09.86**

(54) **Assembly kit for toy or the like.**

(30) Priority: **12.10.85 JP 227504/85**

(43) Date of publication of application: **22.04.87 Bulletin 87/17**

(45) Publication of the grant of the patent: **07.02.90 Bulletin 90/6**

(84) Designated Contracting States: **DE FR GB NL**

(56) References cited:
**EP-A- 0 044 057**
**WO-A-83/02633**
**FR-A- 1 007 327**

(73) Proprietor: **Abero Laboratory Inc., 4-6-6, Itachibori Nishi-ku, Osaka, 550(JP)**

(72) Inventor: **Yoshida, Takaharu, 3-25-706, Kasumicho, Nishinomiya-shi Hyogo-ken(JP)**

(74) Representative: **Smulders, Theodorus A.H.J., Ir. et al, Vereenigde Octrooibureaux Nieuwe Parklaan 107, NL-2587 BP 's-Gravenhage(NL)**

**EP 0 219 148 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to an assembly kit for toy or the like comprising a plurality of rod elements, each having first and second recessed portions at the ends respectively, the second recessed portions being smaller in diameter than the first recessed portions and extending axially outward from the first recessed portions; a plurality of bolts having head portions and shank portions connected to the head portions, the head portions being formed in a disk shape to respectively be received in the first recessed portions and the shank portions being respectively provided with external threads at the free end and being formed to be received in the second recessed portions; and a plurality of connecting elements forming spheres in general being provided with a plurality of internal threads with which the bolts are engaged.

An assembly kit for toy or the like of this type is known from EP-A 0 044 057. The rod element is composed of a wooden rod and two head pieces of metal attached to the wooden rod. The head pieces include the first and second recessed portions containing a freely rotatable bolt. A nut at the free end of the head piece and connected to the bolt by a pin provides in bolt rotating means. So the kit elements are comparatively complicated in configuration and fabrication. Further to be used as toy said elements have an unattractive appearance, whereas reliable and long-lasting attachment of the head pieces to the rod could raise problems at relatively small rod and head piece dimensions.

Moreover, assembling a cube, for exemple, by mounting of especially intermediate rod elements, in connecting elements, or disassembling said cube, by dismounting the rod elements, and again especially intermediate rod elements, out of the connecting elements, causes considerable forces on the other already or still assembled rod and connecting elements, thus causing some strain to them, as the rod length is about two times the thread length of the bolt longer as the distance between two assembled connecting elements. During rotating the bolt to mount or dismount a rod element the varying strain resulting of said difference in length complicates said rotating and thus easy handling during assembling or disassembling resulting in poor productivity.

It is an object of the invention to provide in a assembly kit for toy use having a comparatively simple construction and attractive appearance.

It is another object of the invention to provide in an assembly kit for toy use which is easy to assemble or disassemble without exerting considerable forces and distorting the already or still assembled elements.

Said objects are accomplished with an assembly kit of the kind as mentioned in the beginning if according to the invention the rod elements are composed of two half portions fixable together by fasteners, and each half portion comprises at each end a semi-arcuate recess, in composed position of two half portions, two of said semi-arcuate recesses forming one of said first recessed portions, the first recessed portions and disk shaped head portions being formed to closely fit into each other.

In a preferred embodiment of the invention the pair of half portions are formed respectively in identical configuration which fact means simplified construction and reduced number of parts. Furthermore, this means that only one set of mold is required in the fabrication of such rod element, which in turn means improved productivity.

In another preferred embodiment, a total of six internal threads are formed in the connecting elements having axes on three straight lines which are perpendicular to one another.

It could be observed that FR-A 1 007 327 discloses a divided rod element. However, this reference shows a fundamentally different construction, which necessitates a large number of different connecting elements. This known assembly comprises a plurality of "rod" elements, each consisting of a pair of less than half portions. The "rod" element is provided with two different recessed portions. The assembly kit further comprises "connecting" elements provided with a plurality of internal threads. The "connecting" elements have to fit in the recessed portions. Dependent of the construction to be made a specific connecting piece has to be chosen. Moreover a "connecting" element has to show a bore with an internal thread through the slot between the two "rod" element parts. This means too that completely removing of a intermediate "rod" element is not possible, as the connecting bolt of the connecting piece is not removable. So this known construction suffers all the problems of the known art as discussed above.

According to the present invention, an assembly kit comprises half-parted rod elements, bolts, and spherical connecting elements; therefore, it is unnecessary to provide a large variety of parts, which fact means simplified construction and improved productivity. Especially where the assembly kit is a toy, this also means reduced cost to general household users and it is thus expected that the invention will be widely reduced to practice.

Rod elements each is such that one pair of half portions is jointed by fasteners; therefore, when assembling the assembly kit into a cube, for example, or disassembling such cube, each rod element is separated into two half portions by loosening the fasteners, so that connecting and disconnecting may be easily carried out through the fasteners or bolts by which the rod element is in screw engagement with connecting elements. Therefore, no much laborious force is required when constructing a cube or the like, it being thus easy to perform assembling and disassembling work. As such, the assembly kit in accordance with the invention permits unskilled persons to perform such assembling and disassembling work without difficulty.

According to the invention, a disc-shaped head of a bolt fits in a first recessed portion of a semi-arcuate configuration formed in each half portion of each rod element and a shank portion of the bolt fits in a second recessed portion which is smaller in diameter than the first recessed portion, so that the bolt head is securely held in the rod element. Thus, connecting the rod element to another rod element may be easily performed through a connecting element. This, coupled with the fact that the assembly kit is simple in construction as a whole, leads to improved productivity.

These and other objects, features and advantages of the invention will become more apparent from the following detailed specification and drawings, in which:

Fig. 1 is a perspective view showing one embodiment of the invention;

Fig. 2 is an exploded view in perspective showing one rod element;

Fig. 3 is a perspective view showing a bolt threadedly engaged with a connecting element;

Fig. 4 is a perspective view showing the connecting element and the bolt when separated from each other;

Fig. 5 is a front view of the connecting element;

Fig. 6 is a side view of the bolt;

Fig. 7 is a plan view of the bolt;

Fig. 8 is a plan view showing a half portion;

Fig. 9 is a side view of the half portion;

Fig. 10 is a bottom view of the half portion;

Fig. 11 is a section taken along the line XI-XI in Fig. 10;

Fig. 12 is a section taken along the line XII-XII in Fig. 11;

Fig. 13 is a section taken along the line XIII-XIII in Fig. 11;

Fig. 14 is a section taken along the line XIV-XIV in Fig. 11;

Fig. 15 is a plan view showing half portions coupled together by the bolt;

Fig. 16 is a side view of construction in Fig. 15;

Fig. 17 is a side view showing the coupled configuration in Figs. 15 and 16;

Fig. 18 is a side view showing a bolt;

Fig. 19 is a front view of the bolt;

Fig. 20 is a perspective view showing an assembly according to the invention;

Fig. 21 is a perspective view showing another form of assembly according to the invention;

Fig. 22 is a perspective view showing further form of assembly according to the invention;

Fig. 23 is a perspective view of plate elements shown in Fig 22;

Fig. 24 is a section showing a plate element threadly engaged with a rod element;

Fig. 25 is an exploded view in perspective showing another embodiment of the invention;

Fig. 26 is a plan view of a connecting element;

Fig. 27 is a plan view of a bolt;

Fig. 28 is a longitudinal section of the bolt shown in Fig. 27;

Fig. 29 is a plan view of a bolt;

Fig. 30 is a longitudinal sectional view of the bolt shown in Fig. 29;

Fig. 31 is a front view of a clamping device;

Fig. 32 is a side view of the clamping device shown in Fig. 31;

Fig. 33 is a plan view of the clamping device shown in Fig. 31;

Fig. 34 is a bottom view of a plate element;

Fig. 35 is a plan view showing the plate element when fixed to a rod member;

Fig. 36 is a section taken along the line A-A in Fig. 35;

Fig. 37 is a bottom view of another form of a plate element corresponding to Fig. 34 in accordance with another embodiment of the invention; and

Fig. 38 is a section showing the plate element when fixed to a rod member.

Referring now to the drawings, preferred embodiments of the invention are described below.

Fig.1 is a perspective view showing one embodiment of the invention. A generally spherical connecting elements 2 are mounted to each axial end of a rod element 1. Another rod element 1 is connected to the rod element 1 through the connecting elements 2. A toy assembly or the like is constructed in this way.

Fig. 2 is an exploded view in perspective showing one rod element 1. The rod element 1 consists of a pair of half portions 1a of identical construction coupled in face to face relation. These half portions 1a are fixed together by bolts 3 as a fastener (see Fig. 1).

Fig. 3 is perspective view showing a connecting element 2 and a bolt 4 threadedly engaged therewith. Fig. 4 is a perspective view showing the connecting element 2 and the bolt 4 as they appear when separated from each other. The bolt 4 has a disk-shaped head 5 and a shank 6 fixed at its base to the head 5. The shank 6 is provided with an external thread 7 at its front end. The connecting element 2 has a plurality of internal threads 8 formed therein. One of the internal threads 8 is engaged by the external thread 7.

Fig. 5 is a front view of the connecting element 2. A total of six internal threads are formed in the connecting element 2, and the axes of these internal threads 8 are either on straight lines or perpendicular to one another.

Fig. 6 is side view of the bolt 4 and Fig. 7 is a plan view thereof. On the outer periphery of the head 5 there is formed a series of knurls 9 extending along the axis thereof which facilitates manual rotation. An outer peripheral edge 10 of the external thread 7 formed on the front end portion of the shank 6 is tapered and truncated-cone shaped, which prevents possible injury during the handling of the kit and facilitates screwing the external screw 7 into one of the internal threads 8.

Fig. 8 is a plan view showing a half portion 1a of a rod element 1. Fig. 9 is a side view of the half portion 1a. Fig. 10 is a bottom view thereof. Fig. 11 is a section taken along the line XI-XI in Fig. 10. Referring to these views, the half portion 1a has an outer periphery of a semi-arcuate configuration, and at both ends thereof in the longitudinal direction there are formed taperedly curved portions 11. A first recessed portions 17 are defined by a peripheral wall 14, an axially inwardly located walls 15a and 15b, and an axially outwardly located walls 16, of the half portion 1a. The first recessed portions 17 are coaxial with the rod element 1, and are configured semi-arcuate, being of uniform radius in the axial direction.

Second recessed portions 18, 19, each having a smaller diameter than the first recessed portions 17, are respectively formed in the walls 16 and an end walls 12. The head 5 of the bolt 4 closely fits in the first recessed portion 17. With the head 5 so held in position, the shank 6 of the bolt 4 fits in the second recessed portions 18, 19. The axes of the second recessed portions are coincident with the axis of the rod element 1.

A barrel portion 21 having an internal thread 20 formed therein is provided axially inwardly of one wall 15a of the half portion 1a. An upwardly protruding annular ledge 22 is formed on the end of the barrel portion 21. Walls 23, 24, 25, 26 and an axially extending wall 27 are formed in the half portion 1a. A positioning recess 28 is formed at an intersection between the walls 25 and 27. A barrel portion 30 defining a through hole 29 is provided axially inwardly of the other wall 15b of the half portion 1a. At an intersection between the walls 26 and 27 there is formed a positioning protrusion 31. A notch 32 corresponding to the annular ledge 22 is formed on the end of the barrel portion 30 defining the through-hole 29. The protrusion 31 corresponds to the recess 28.

Fig. 12 is a section taken along the line XII-XII in Fig. 11. The spiral ridges of the internal thread formed in the barrel 21 have a comparatively large width in the axial direction of the thread 20 (in the vertical direction in Fig. 12), which fact contributes toward improved strength and reduced number of turns required in screwing the bolt 3 and facilitates assembling and disassembling.

Fig. 13 is a section taken along the line XIII-XIII in Fig. 11. The walls 25, 27 continue to the peripheral wall 14, which fact contributes toward increased strength of the half portion 1a, and accordingly of the rod element 1.

Fig. 14 is a section taken along the line XIV-XIV in Fig. 11. A recess 33 is formed in a connecting zone between the barrel portion 30 and the peripheral wall 14.

The head 34 of the bolt 3 shown in Fig. 1 fits into the recess 33. The external thread 36 formed on the shank 35 of the bolt 3 engages the internal thread 20 of the other half portion 1a.

Fig. 15 is a plan view showing a pair of half portions 1a coupled together by bolt 3. Fig. 16 is a side view thereof. Fig. 17 is a right end view in side elevation showing the coupled configuration in Figs. 15 and 16. The external thread formed on the shank 35 of the bolt 3 extends through the through-hole 29 of one half portion 1a and engages the internal thread 20 of the other half portion 1a. With the shank 35 held in that position, the head 34 of the bolt 3 never does protrude radially outwardly of the outer periphery of the half portion 1a. The head 34 of the bolt 3 seats on the bottom 33a of the recess 33. A cross-shaped arcuate depression 34a is formed on the bolt head 34. Therefore, the bolt 3 can be tightened or unscrewed with a coin.

A slight notch 37 is formed on both longitudinal side edges of the half portion 1a. The presence of such notch 37 prevents possible injury during manual handling of the half portions 1a. No notch 37 is present on the curved portion 11 at either end of the half portion 1a.

The peripheral surface of the end wall 12 of the half portion 1a forms an arcuate surface 38 running along the outer periphery of the connecting element 2. Thus, the arcuate surface 38 may be brought into closed surface contact with the outer periphery of the connecting element 2, which fact ensures firm connection between the rod element 1 and the connecting element 2 and prevents loose connection.

As shown in Fig. 10, each half portion 1a is configured generally symmetrically relative to a symmetrical plane perpendicular to kits axis at a median location thereof, and the internal thread 20 and the through-hole 29 are equispaced from the symmetrical plane 39, the recess 28 and protrusion 31 being also equispaced from the symmetrical plane 39. In this way, each rod element 1 is comprised of a pair of half portions 1a having an identical configuration, which fact means simplified construction and reduced number of parts. Furthermore this means that only one set of mold is required in the fabrication of such rod element, which in turn means improved productivity.

Fig. 18 is a side view showing a bolt 3. Fig. 19 is a front view of the bolt 3. The outer periphery 40 of head 34 of the bolt 3 is spherical. The front end outer peripheral edge 41 of the external thread 36 is of a tapered truncated cone shape, which fact ensures easy engagement of the external thread 36 with the internal thread 20 and eliminate the possibility of any personal injury being caused during the handling of the kit, thus assuring handling safety.

When the rod element 1, in its assembled condition, is seen from above, the head 34 of another bolt 3 is out of sight, which fact adds to the beauty of the kit. With the bolt 4 and the connecting element 2 fixed together, the bolt 4 and the rod element 1 are angularly displaceable about their axes and relative to each other. Therefore, with the rod element 1 and the connecting element 2 coupled together through the bolt 4, it is possible to assemble and disassemble the rod 1 with the bolt 3, which fact assures improved assembly work.

Fig. 20 is a perspective view showing an assembly 43 constructed by using such rod elements 1, bolts 3, 4, and connecting elements 2 in plurality as shown in Figs. 1 to 19. After such assembly 43 is constructed, it is very easy to construct an assembly 44 shown in Fig. 21, according to the invention. In this case, it is possible to remove a rod element 45 of the assembly 43 in Fig. 20 by disassembling it into a pair of half portions by removing the corresponding bolt 3. Then, bolts 4 may be removed from connecting elements 46, 47 by rotating the bolts by finger. Bolts 4 are brought in thread engagement with connecting elements 48, 49 of the assembly 43, and then rod elements 50, 51 for the assembly 44 in Fig. 21 are fixed in position. Subsequent assembling work may be continued in similar manner in order to construct the assembly 44. During such assembling and disassembling work, no excessively laborious force is required; and no unreasonable force will be exerted on the rod elements 45, 50, 51 or any other rod element. Hence, all work involved may be very efficiently performed.

Fig. 22 is a perspective view showing another form of assembly according to the invention. In this embodiment, plate elements 53 are used. As shown in Fig. 23, each plate element 53 has support pieces 54, which engage inner side periphery of rod elements 55 of the assembly as Fig. 24 shows.

Rod elements 45, 50 51, 55 have a configuration similar to that of aforesaid rod element 1, and connecting elements 46, 47, 48, 49 have a configuration similar to that of the connecting element 2.

In the earlier mentioned embodiment, the axis of the internal threads 8 in each connecting body 2 are either on same straight line or perpendicular to one another, but alternatively they may have such other angles as 35° and 45°. It is also possible that connecting elements 2 having different angles for the axes of the internal threads are differentiated in color from one another. Such differentiation may enable younger children to easily construct an assembly in accordance with the invention. Further, differentiating bolt elements in color from bolts 3 add to the beauty of the assembly kit. Differentiating each pair of half portions 1a constituting a rod element 1 in color from one to the other will also add to the beauty of the kit.

Fig. 25 is an exploded view in perspective showing another embodiment of the invention. Fig. 26 is a plan view of a connecting element 61. Fig. 27 is a plan view of a bolt 64. Fig. 28 is a longitudinal section of the bolt 64 shown in Fig. 27. Fig. 29 is a plan view of a bolt 65. Fig. 30 is a longitudinal sectional view showing the bolt 65 shown in Fig. 29. This embodiment is similar to the earlier described embodiment, with comparable portions given identical reference numerals. In this embodiment, the connecting element 61 has a configuration more convenient for molding purposes than the connecting element 2 in the earlier mentioned embodiment. A protrusion 62 formed on the wall 25 of a half portion 81a extends perpendicularly to the axis of the half portion 81a and is generally of a rectangular parallelepiped configuration, its both ends in the longitudinal direction being chamfered. The wall 26 has recess 63 formed therein correspondingly to the protrusion 62. The protrusion 62 and the recess 63 are larger in size than the protrusion 31 and the recess 28 in the earlier embodiment. This ensures more accurate positioning and fitting in assembling a pair of half portions 81a.

Bolts 64, 65 have fitting holes 66, 67 respectively formed therein which extend therethrough in the axial direction thereof. An axially perpendicular section of the fitting holes 66, 67 each is square. A clamping device 70 shown in Figs. 31 to 33 has a fitting portion 71 formed in a square rod shape, which fits in the fitting holes 66, 67. By holding and turning a handle portion 72 continued to the fitting portion 71 is it possible to clamp the bolts 64, 65 easily. Heads 64a, 65a of the bolts 64, 65 have depressions 64b, 65b formed thereon as in the case of the bolt 3 in the earlier mentioned embodiment, so that the bolts 64, 65 may be readily clamped by using a coin. Thus, working efficientcy may be improved by suitably using the clamping device. The fitting holes 66, 67 extend through the entire axial length of the bolts 64, 65 from the heads 64a, 65a to the front ends 64e, 65e of shanks 64d, 65d having external threads 64c, 65c formed thereon, and this prevents the possibility of windpipe choking in the event of accidental swallowing by an infant and thus assures improved safety.

Fig. 34 is a bottom view of a plate element 75. Fig. 35 is a plan view showing the plate element 75 as it appears when fixed to a rod member 81. Fig. 36 is a section taken along the line A-A in Fig. 35. Mutually intersecting two reinforcement ribs 77, 78 are formed on the back of a sheet portion 76 of the plate element 75. A peripheral edge portion 80 having support pieces 79 formed thereon is provided around outer periphery of the sheet portion 76. The plate element 75 formed in this way is more durable than the plate element 53 in earlier embodiment, because it is reinforced, and is easy to remove. Support pieces 79 are formed in pair on each side, and therefore they are not likely to slippage in the event of external force being exerted in a direction perpendicular to the thicknesswise direction of the plate member 75 (in the direction parallel to the sheet surface of Fig. 34).

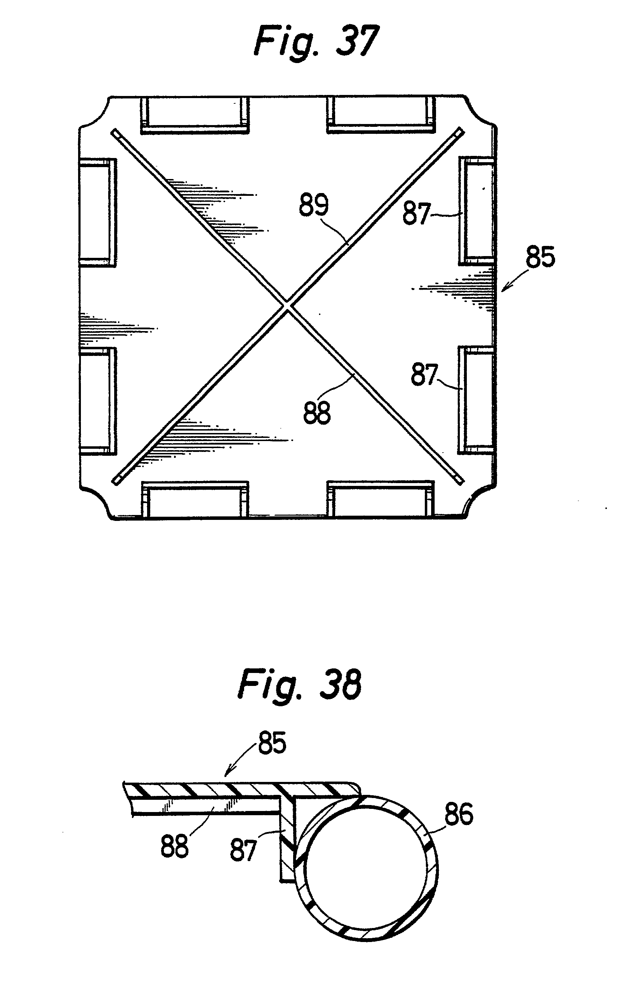

Fig. 37 is a bottom view of another form of a plate element 85 corresponding to Fig. 34 in accordance with another embodiment of the invention and Fig. 38 is a section showing the plate element 85 when fixed to a rod member 86. Support pieces 87 are fixed to the rod element 86 in the condition affixed to outer surface of the rod element 86. Rib plate 88, 89 are mounted on the sheet portion 85.

The assembly kit in accordance with the invention may be formed of synthetic resins.

Not only may the assembly kit according to the invention be used as a toy, but also it may be worked in connection with shelves or the like.

According to the invention, as above described, it is possible to accomplish a large variety of assembly configurations by using parts of identical construction, thereby minimizing the number of parts involved. Further, according to the invention, no much labor is required in assembling and disassembling work using the assembly kit of the invention, which naturally means improved working efficiency. Thus, the assembly kit according to the invention may be very widely used in general households.

## Claims

1. An assembly kit (43, 44, 52) for toy or the like comprising a plurality of rod elements (1), each having first and second recessed portions (17, 18, 19) at the ends respectively, the second recessed portions (18, 19) being smaller in diameter than the first recessed portions (17) and extending axially outward from the first recessed portions;
a plurality of bolts (4) having head portions (5) and shank portions (6) connected to the head portions, the head portions being formed in a disk shape to respectively be received in the first recessed portions and the shank portions being respectively provided with external threads at the free end and being formed to be received in the second recessed portions; and
a plurality of connecting elements (2) forming spheres in general being provided with a plurality of internal threads (8) with which the bolts are engaged, characterized in that
the rod elements (1) are composed of two half portions (1a) fixable together by fasteners (3), and
each half portion comprises at each end a semi-arcuate recess, in composed position of two half portions (1a), two of said semi-arcuate recesses forming one of said first recessed portions (17), the first recessed portions and disk shaped head portions being formed to closely fit into each other.

2. An assembly kit as claimed in claim 1, characterized in that the pair of half portions (1a) are formed respectively in identical configuration.

3. An assembly kit as claimed in claim 1 or 2, characterized in that a total of six internal threads (8) are formed in the connecting elements (2) having axes on three straight lines which are perpendicular to one another.

## Patentansprüche

1. Bausatz (43, 44, 52) für Spielzeug oder dergleichen, mit einer Anzahl von Stangenelementen (1) mit jeweils ersten und zweiten mit Aussparungen versehenen Abschnitten (17, 18, 19) jeweils an den Enden, wobei die zweiten mit Aussparungen versehenen Abschnitte (18, 19) einen kleineren Durchmesser aufweisen als die ersten mit Aussparungen versehenen Abschnitte (17) und sich von den ersten mit Aussparungen versehenen Abschnitten axial nach außen erstrecken, mit einer Anzahl von Schrauben (4) mit einem Kopf (3) und einem mit dem Kopf verbundenen Schaft (6), wobei die Schraubenköpfe zur jeweiligen Aufnahme in den ersten mit Aussparungen versehenen Abschnitten scheibenförmig ausgebildet sind und die Schäfte an ihrem freien Ende jeweils mit Außengewinden versehen und für die Aufnahme in den zweiten mit Aussparungen versehenen Abschnitten ausgebildet sind, und mit einer Anzahl von kugelförmigen Verbindungselementen (2), welche allgemein mit einer Anzahl von Innengewinden (8) versehen sind, in welche die Schrauben eingreifen, dadurch gekennzeichnet, daß die Stangenelemente (1) aus zwei Halbteilen (1a) zusammengesetzt sind, welche durch Befestigungsmittel (3) miteinander verbindbar sind, und daß jedes Halbteil im zusammengesetzten Zustand zweier Halbteile (1a) an jedem Ende eine halbbogenförmige Aussparung aufweist, wobei zwei der halbbogenförmigen Aussparungen einen der ersten mit Aussparungen versehenen Abschnitte (17) bilden, wobei die ersten mit Aussparungen versehenen Abschnitte und scheibenförmigen Schraubenköpfe so ausgebildet sind, daß sie fest ineinander passen.

2. Bausatz nach Anspruch 1, dadurch gekennzeichnet, daß die beiden Halbteile (1a) jeweils in identischer Form ausgebildet sind.

3. Bausatz nach Anspruch 1 oder 2, dadurch gekennzeichnet, daß insgesamt sechs Innengewinde (8) in den Verbindungselementen (2) ausgebildet sind, welche Achsen auf drei geraden Linien aufweisen, die senkrecht aufeinanderstehen.

## Revendications

1. Nécessaire d'assemblage (43, 44, 52) pour jouet ou analogue, comprenant une pluralité d'éléments en forme de tige (1) ayant chacun des premières et secondes parties évidées (17, 18, 19) à leurs extrémités respectives, les secondes parties évidées (18, 19) étant de diamètre plus petit que les premières parties évidées (17) et s'étendant axialement vers l'extérieur des premières parties évidées; une pluralité de boulons (4) à parties tête (5) et parties fût (6) reliées aux parties tête, les parties tête étant en forme de disque pour être reçues respectivement dans les premières parties évidées et les parties fût étant respectivement munies de filets de vis externes à leur extrémité libre et étant formées pour être reçues dans les secondes parties évidées; et une pluralité d'éléments de raccordement (2), en forme générale de sphère étant munis d'une pluralité de filets de vis internes (8) avec lesquels viennent en prise les boulons, caractérisé par le fait que les éléments en forme de tige (1) sont composés de deux demi-parties (1a) fixables l'une à l'autre par des moyens de retenue (3) et chaque demi-portion comprend à chaque extrémité un évidement semi-arqué, en position composée des deux demi-parties (1a) deux desdits évidements semi-arqués formant une desdites premières parties évidées (17), les premières parties évidées et les parties tête en forme de disque étant formées pour s'ajuster serrées l'une dans l'autre.

2. Nécessaire d'assemblage selon la revendication 1, caractérisé par le fait que la paire de demi-parties (1a) est formée respectivement avec une configuration identique.

3. Nécessaire d'assemblage selon la revendication 1 ou 2, caractérisé par le fait qu'un total de six filets de vis internes (8) sont formés dans les éléments de raccordement (2) et ont leurs axes sur trois lignes droites perpendiculaires l'une à l'autre.

Fig. 1

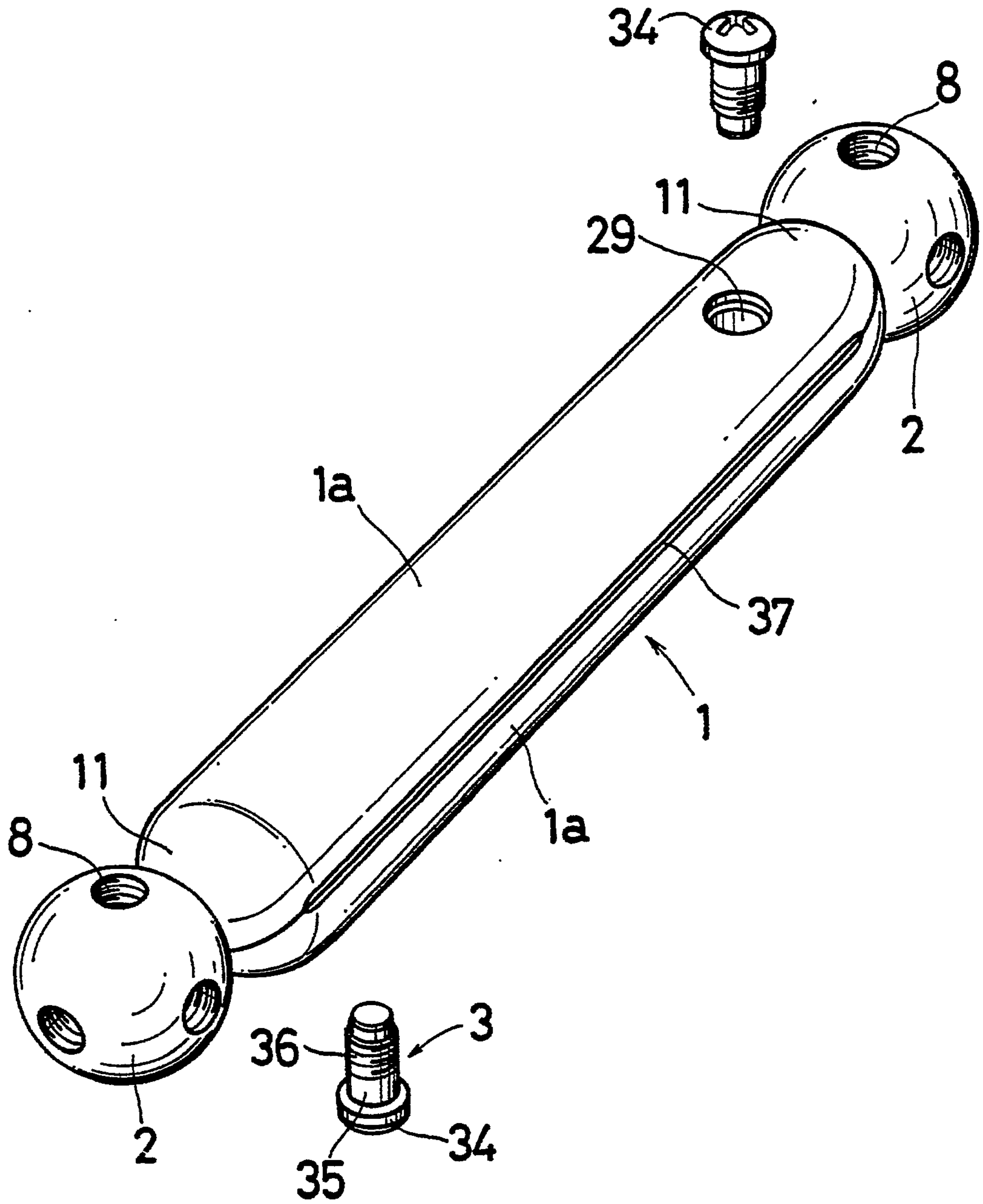

Fig. 2

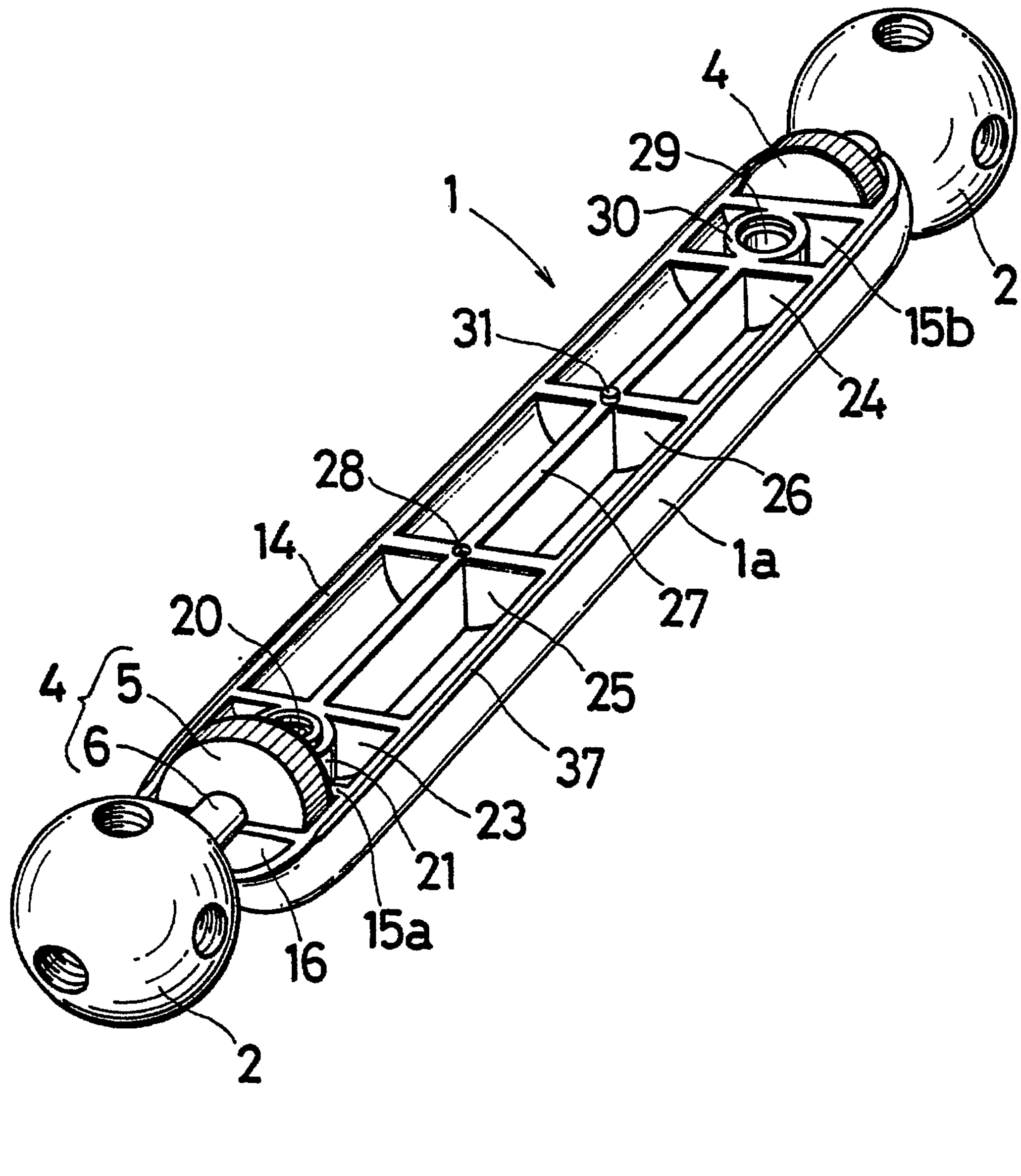

Fig. 3

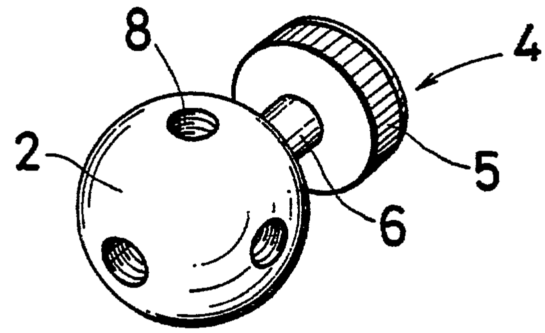


Fig. 4

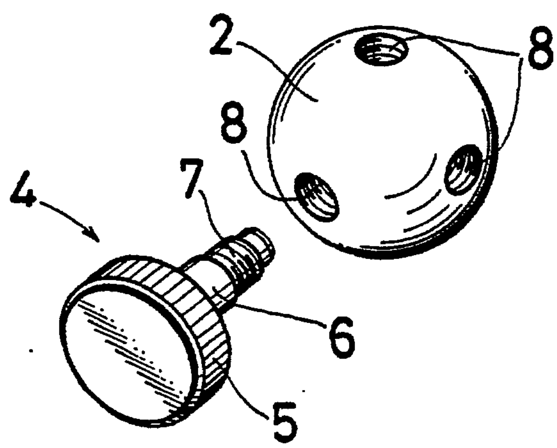

Fig. 5

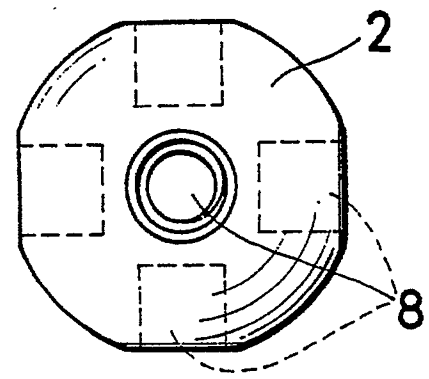


Fig. 6

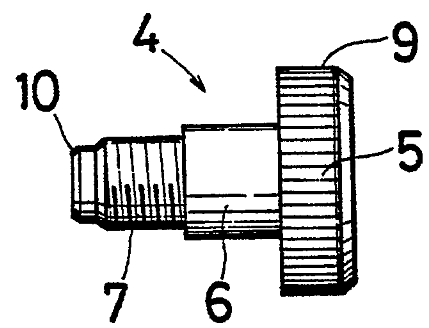


Fig. 7

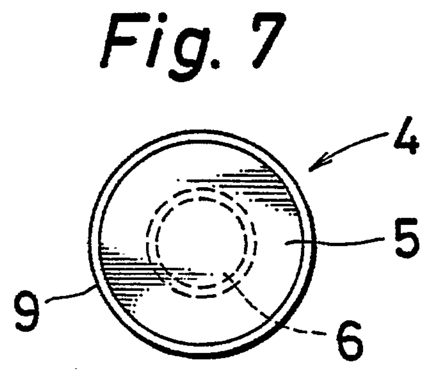

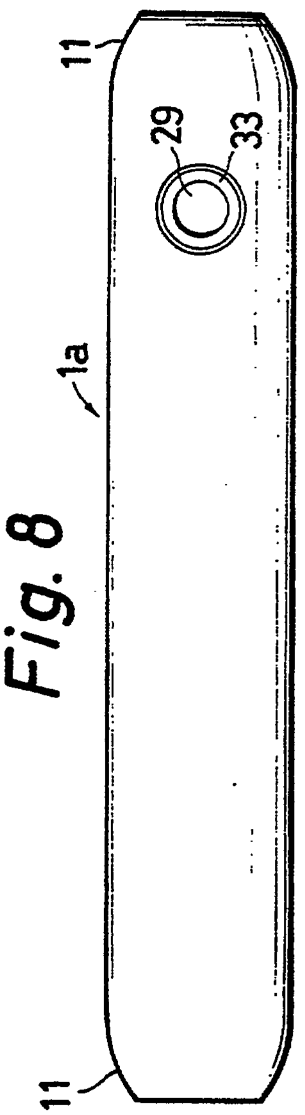


Fig. 8

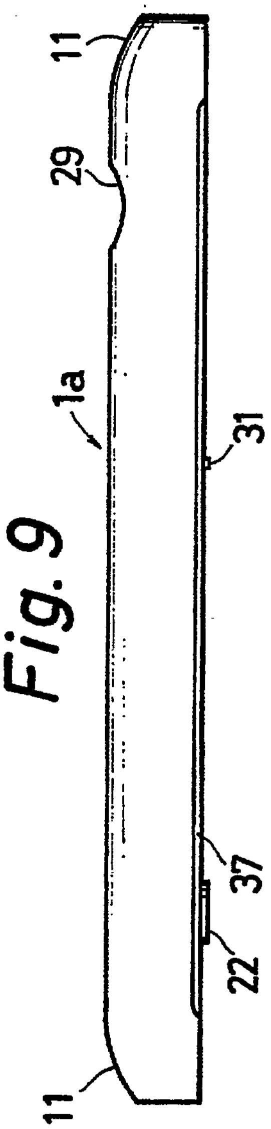


Fig. 9

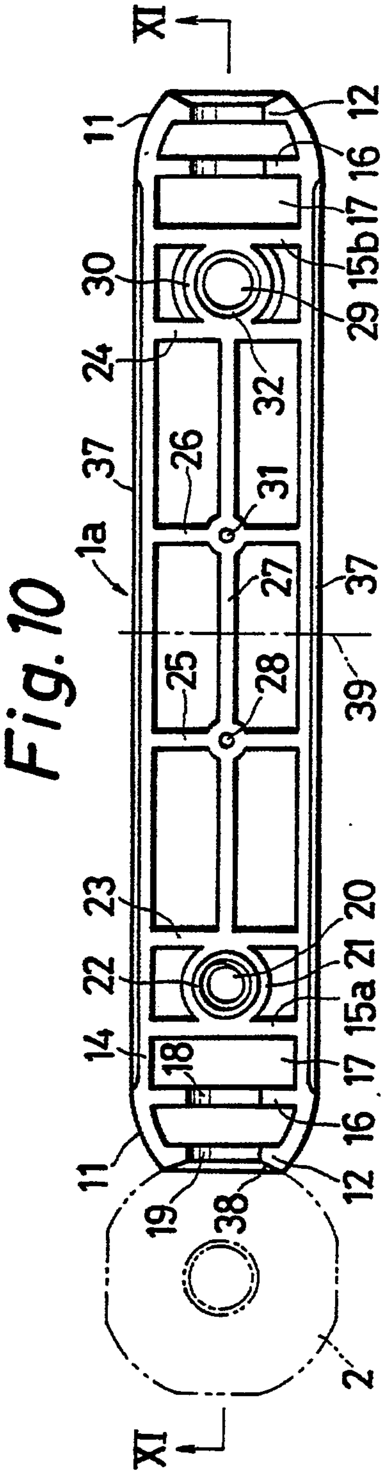


Fig. 10

Fig. 11

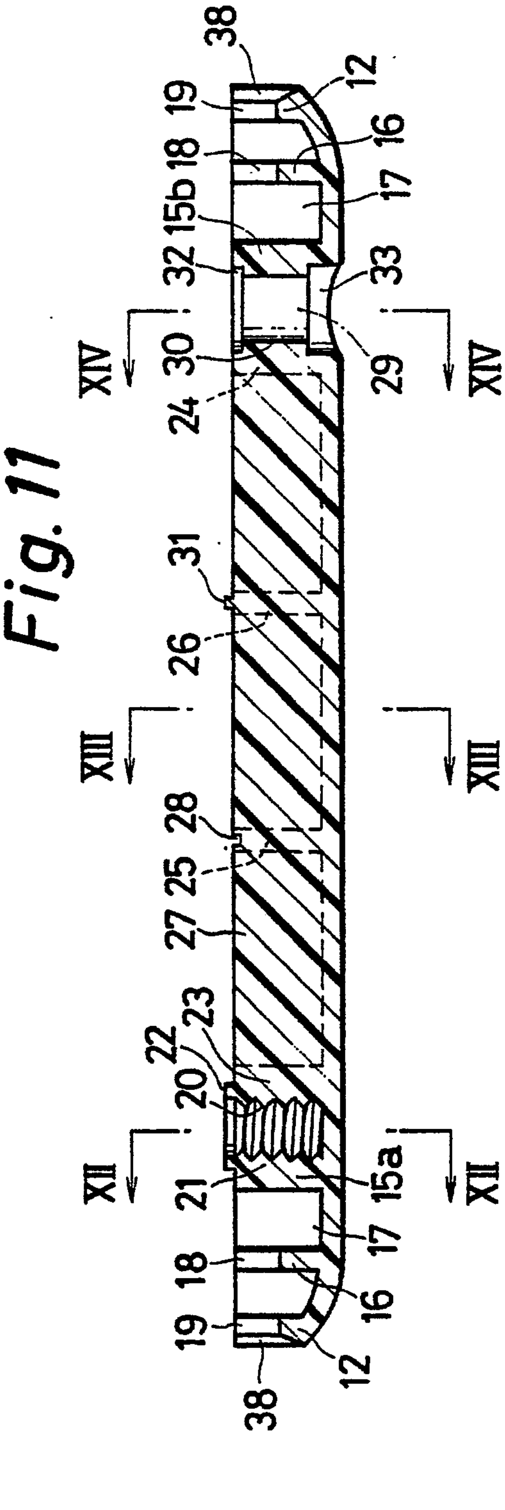


Fig. 12

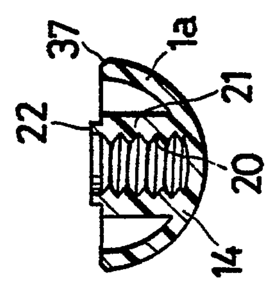


Fig. 13

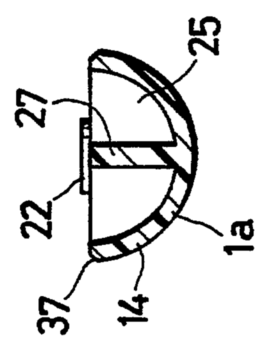


Fig. 14

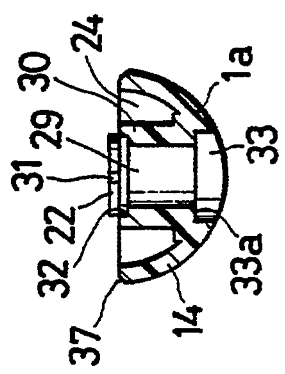

Fig. 15

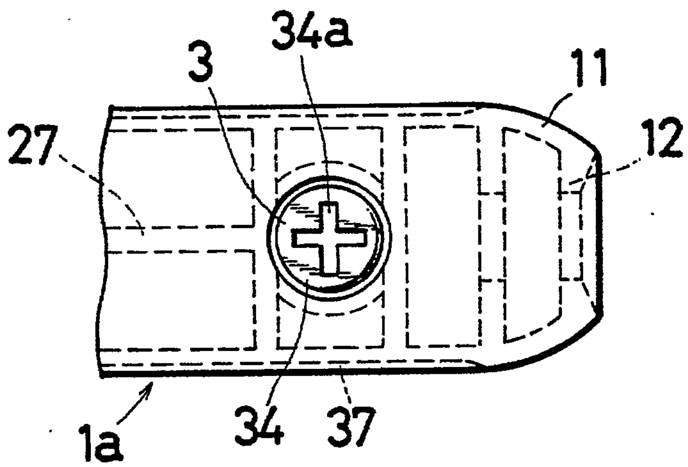


Fig. 16

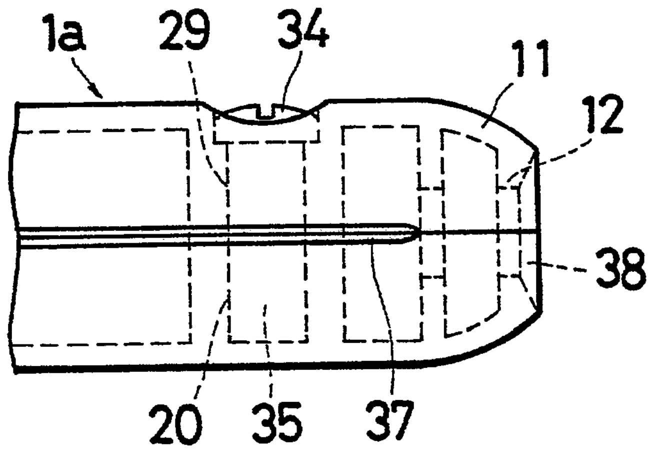

Fig. 17

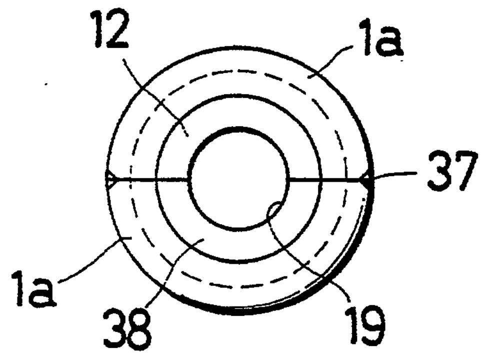


Fig. 18

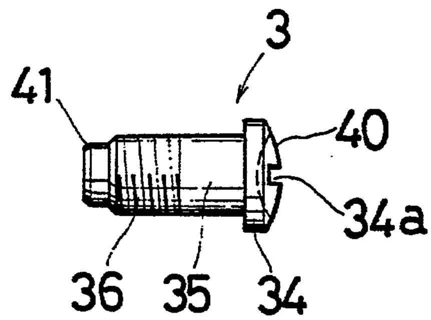


Fig. 19

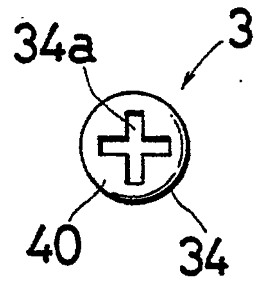

*Fig. 20*

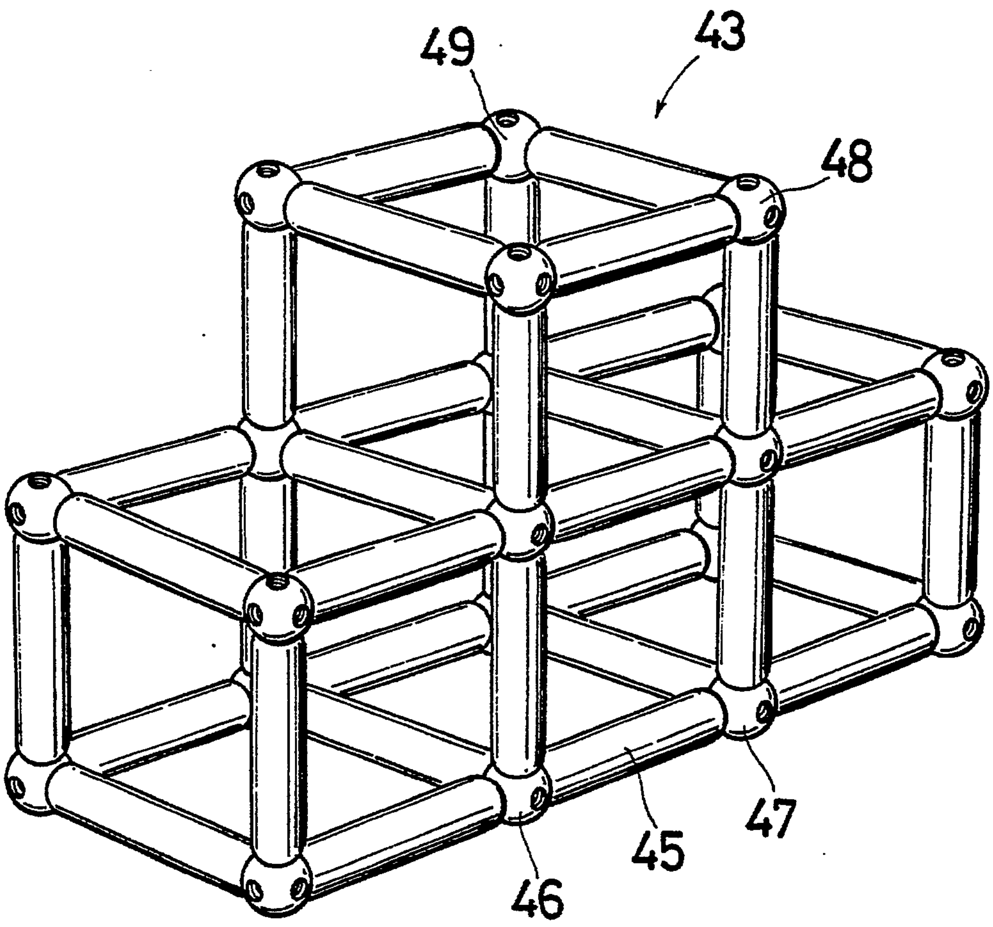

Fig. 21

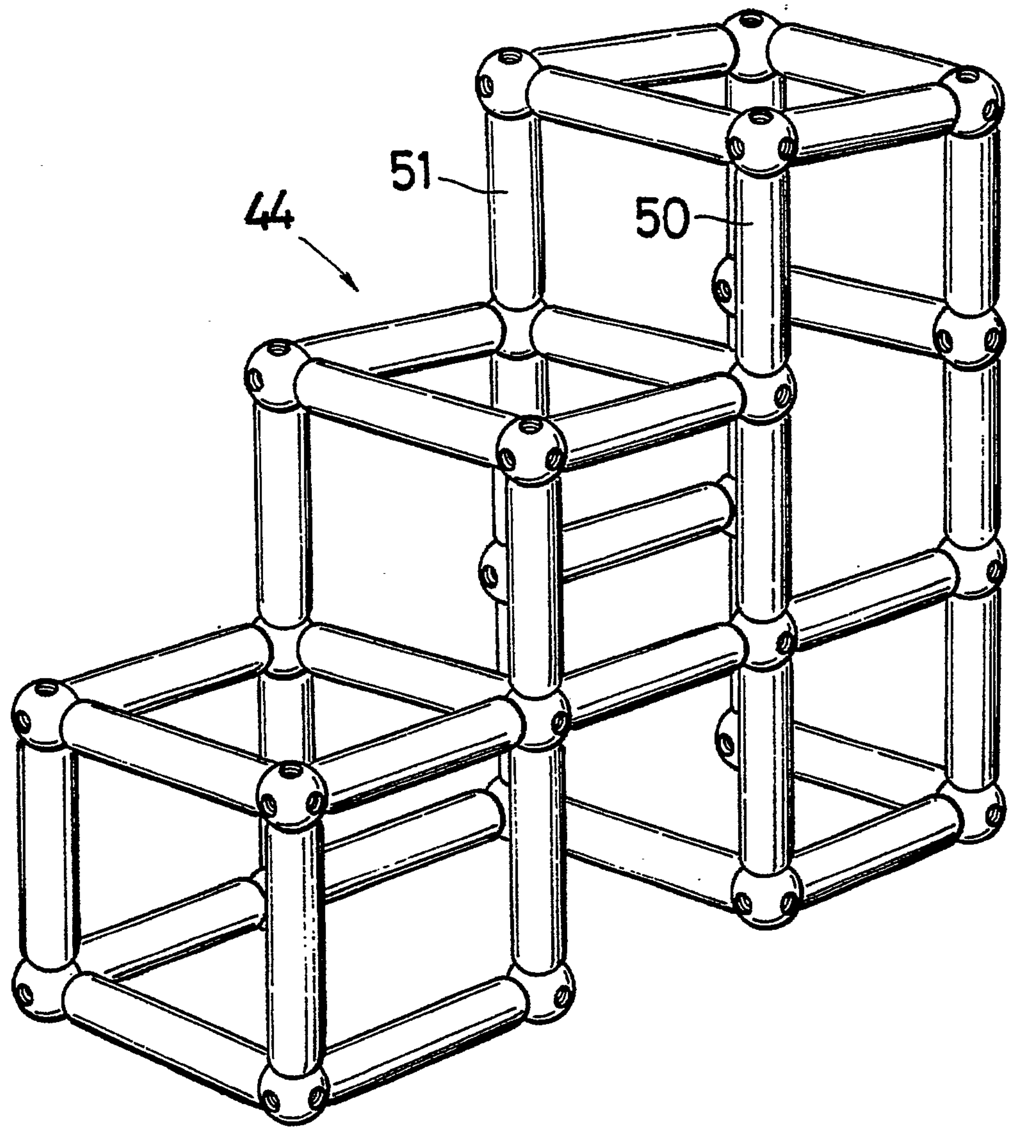

*Fig. 22*

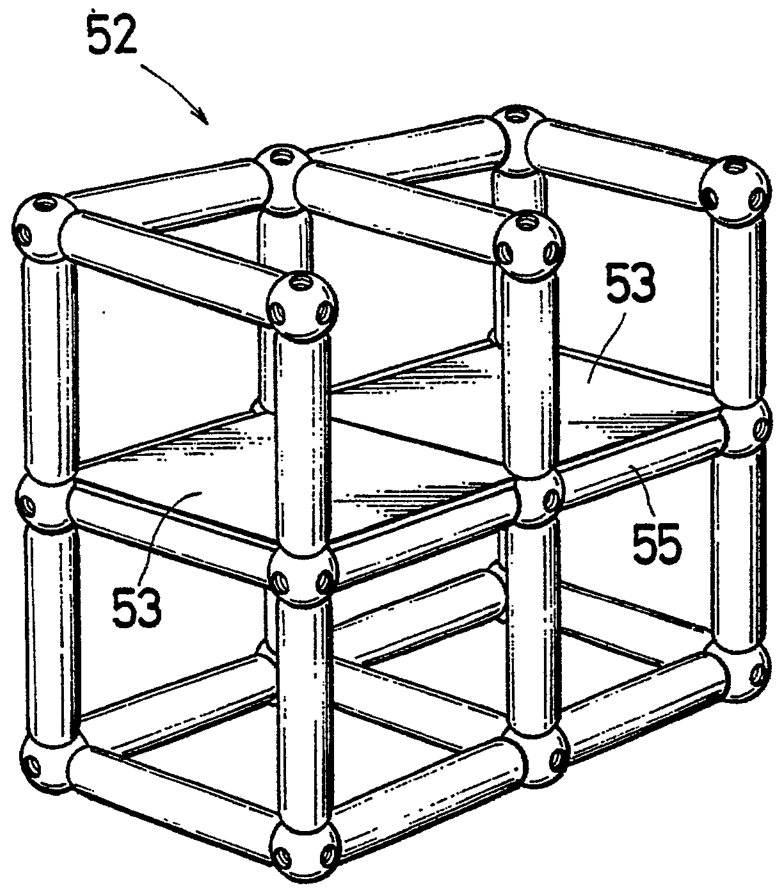

Fig. 23

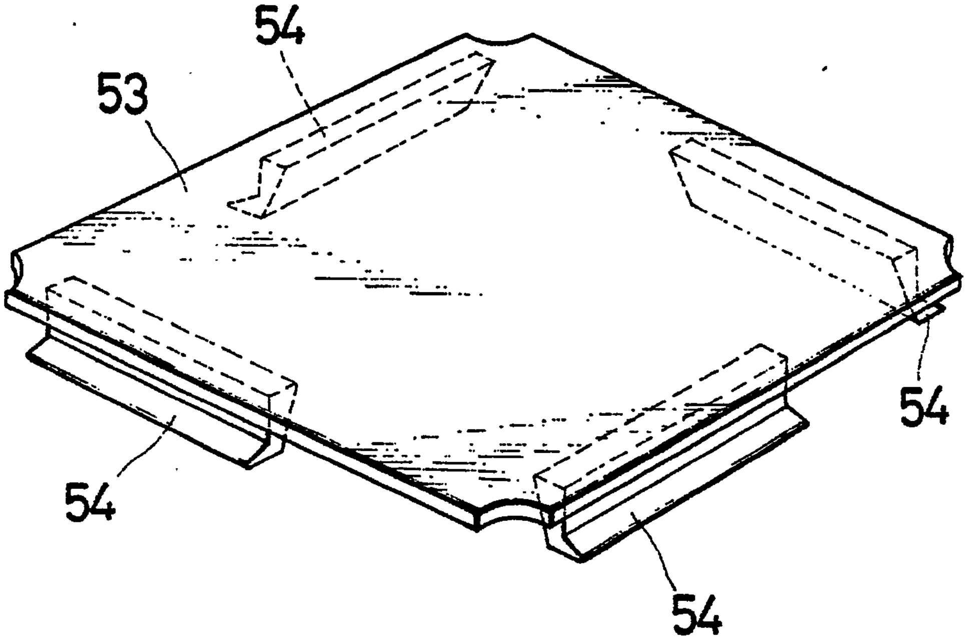


Fig. 24

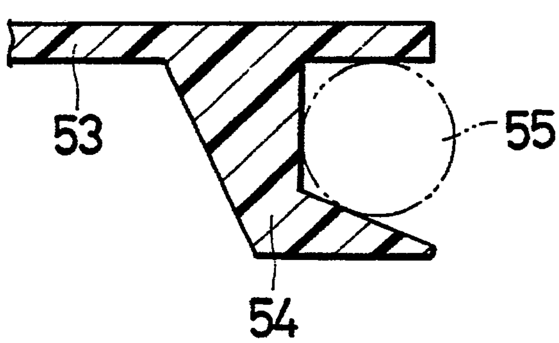

Fig. 25

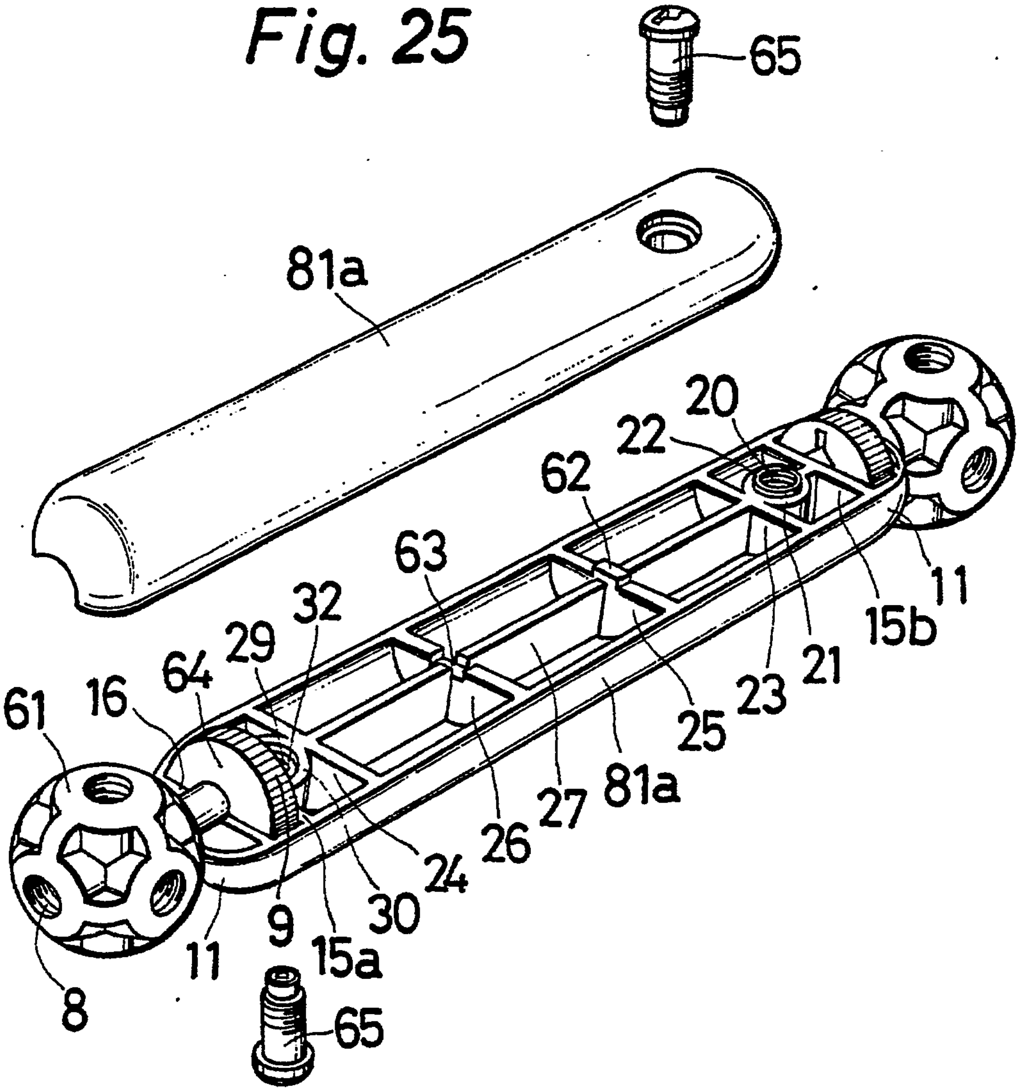
65
81a
20
22
62
63
32
29
64
16
61
11
15b
21
23
25
81a
27
26
24
30
9
15a
11
8
65

Fig. 26

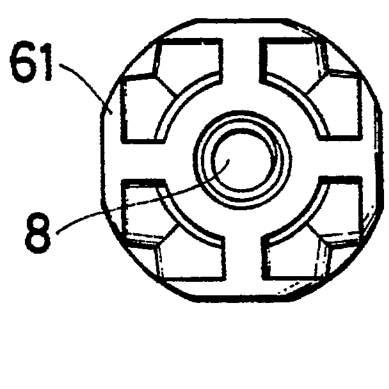
61
8

Fig. 27

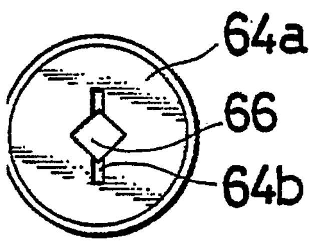


Fig. 28

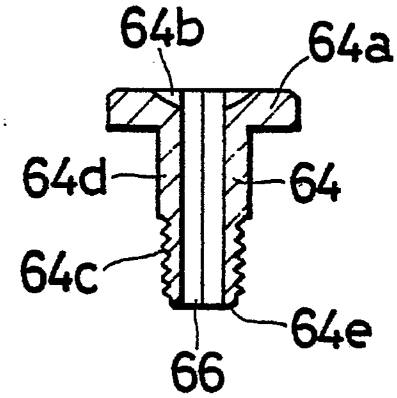


Fig. 29

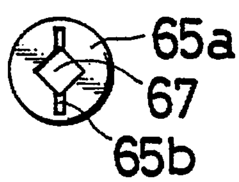


Fig. 30

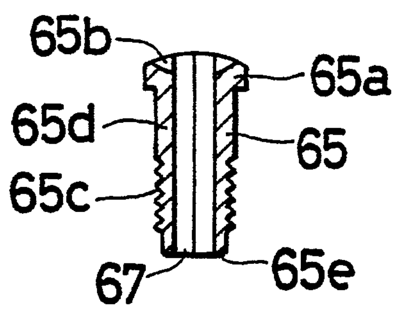


Fig. 31

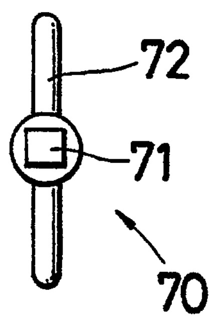


Fig. 32

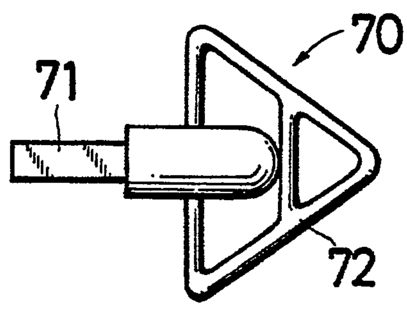


Fig. 33

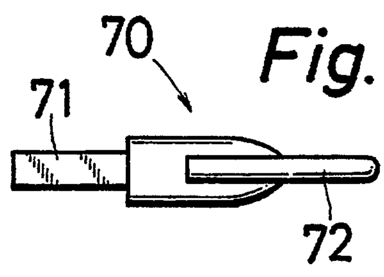

Fig. 34

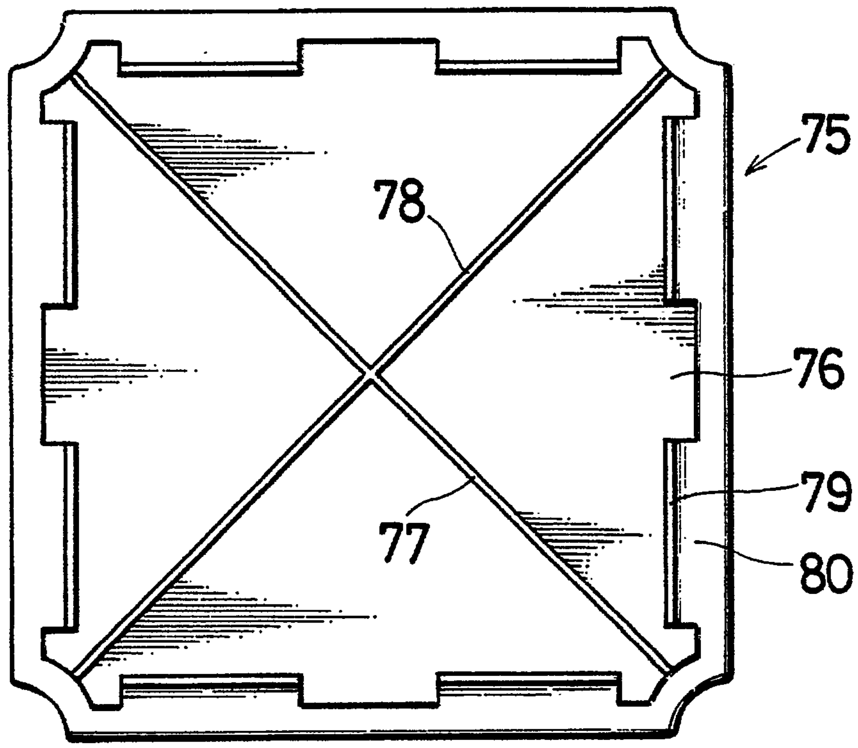


Fig. 35

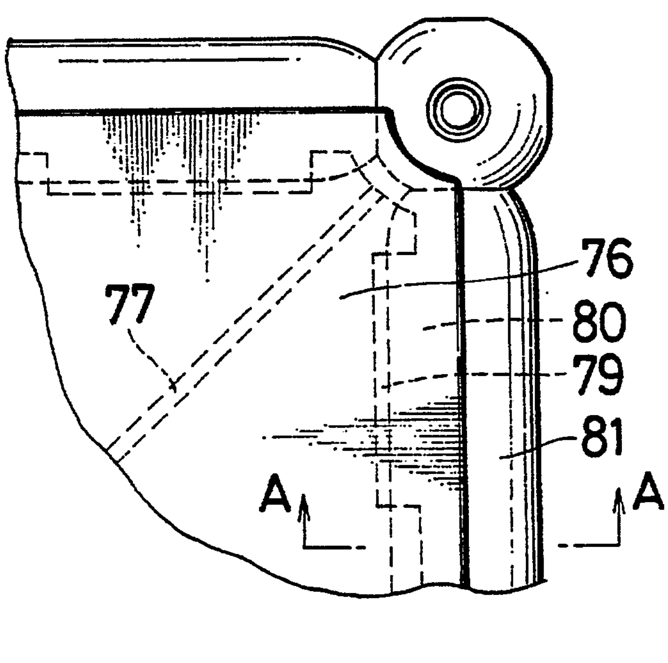


Fig. 36

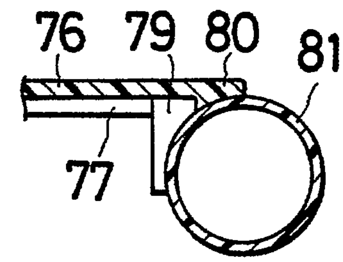

Fig. 37

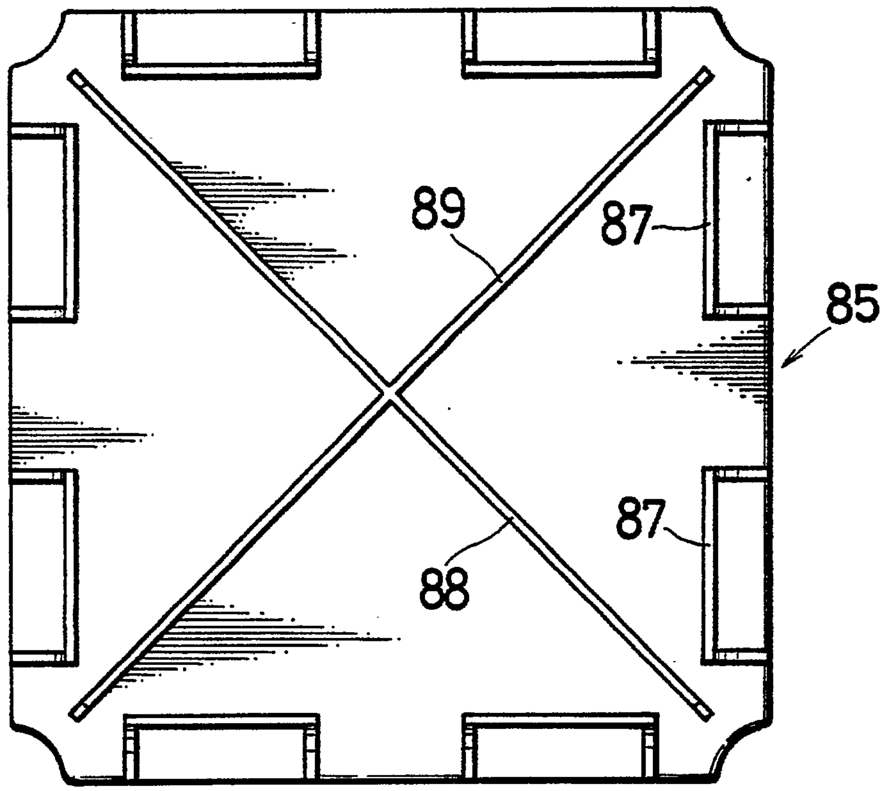


Fig. 38